**Europäisches Patentamt**

**European Patent Office**

**Office européen des brevets**

(19)

(11) Veröffentlichungsnummer: **0 274 037**

**A1**

# (12) EUROPÄISCHE PATENTANMELDUNG

(21) Anmeldenummer: **87117222.7**

(22) Anmeldetag: **23.11.87**

(51) Int. Cl.4: **B01D 53/34** , B01D 7/00 , B01D 50/00

| | |
|---|---|
| Die Bezeichnung der Erfindung wurde geändert (Richtlinien für die Prüfung im EPA, A-III, 7.3). | (71) Anmelder: **BBC Brown Boveri Aktiengesellschaft**<br><br>**CH-5401 Baden(CH)** |
| (30) Priorität: **10.12.86 CH 4916/86** | |
| (43) Veröffentlichungstag der Anmeldung: **13.07.88 Patentblatt 88/28** | (72) Erfinder: **Hirth, Michael, Dr. Weidweg 4 CH-5035 Unterentfelden(CH)**<br>Erfinder: **Wiegart, Norbert, Dr. Im Eichatl 5 CH-5400 Baden(CH)** |
| (84) Benannte Vertragsstaaten: **AT CH DE FR GB IT LI SE** | |

(54) **Verfahren und Vorrichtung zur Trennung von Partikeln.**

(57) Bei der Trennung von Partikeln werden diese gemeinsam mit einem gasförmigen Trägermedium erhitzt. Dabei verdampfen Bestandteile dieser Partikel, werden in einem Kühler (21) abgekühlt und kondensieren aus. Eine Vorrichtung zur Durchführung dieses Verfahrens weist ein Gebläse (1) und eine Aufheizeinrichtung (7) auf.

Es soll ein kontinuierliches Verfahren angegeben werden, welches grosstechnisch eingesetzt werden kann. Dies wird dadurch erreicht, dass die Partikel und das Trägermedium kontinuierlich und dosiert zu einem fluidisierten Gemenge vermischt werden. Dieses Gemenge wird in einem Wirbelbett einer Aufheizeinrichtung (7) auf eine vorgegebene Temperatur aufgeheizt, wobei eine aus einem hierbei gebildeten Dampf-Gas-Gemisch und in Partikelform verbleibenden Bestandteilen der Partikel bestehende Mischung entsteht. Nach dem Austreten der Mischung aus der Aufheizeinrichtung (7) werden die in Partikelform verbleibenden Bestandteile der Partikel abgeschieden und das Dampf-Gas-Gemisch wird in mindestens einem geschlossenen Kreislauf weitergeleitet.

FIG.1

# VERFAHREN ZUR TRENNUNG VON PARTIKELN UND VORRICHTUNG ZUR DURCHFÜHRUNG DES VERFAHRENS

## TECHNISCHES GEBIET

Die Erfindung geht aus von einem Verfahren zur Trennung von Partikeln und von einer Vorrichtung zur Durchführung des Verfahrens. Insbesondere betrifft sie ein Verfahren zur Trennung von Partikeln, welche mindestens einen unterhalb einer vorgegebenen Temperatur verdampfbaren ersten Stoff und mindestens einen oberhalb der vorgegebenen Temperatur in Partikelform verbleibenden zweiten Stoff aufweisen, bei welchem die Partikel gemeinsam mit einem strömenden gasförmigen Trägermedium auf die vorgegebene Temperatur aufgeheizt werden, wobei aus dem mindestens einen verdampfenden ersten Stoff und dem gasförmigen Trägermedium ein Dampf-Gas-Gemisch gebildet wird, welches anschliessend zumindest teilweise soweit abgekühlt wird, bis der mindestens eine verdampfte erste Stoff kondensiert. Insbesondere betrifft sie ferner eine Vorrichtung zur Durchführung dieses Verfahrens mit einem Gebläse und einer diesem nachgeschalteten, mit einem Kühler in Wirkverbindung stehenden, Aufheizeinrichtung.

## STAND DER TECHNIK

Aus der Zeitschrift "Staub, Reinhaltung der Luft", Band 46 (1986), Seiten 120 bis 124, ist ein diskontinuierlich arbeitendes Verfahren zur Trennung von Partikeln bekannt. Bei diesem Verfahren werden einzelne Chargen von Partikeln, beispielsweise Elektrofilterstäube mit angelagerten Schwermetallverbindungen, gemeinsam mit einem strömenden gasförmigen Trägermedium auf vergleichsweise hohe Temperaturen aufgeheizt. Bestandteile dieser Partikel, insbesondere die Schwermetallverbindungen, verdampfen und bilden mit dem Trägermedium ein Dampf-Gas-Gemisch. Dieses Dampf-Gas-Gemisch wird anschliessend soweit abgekühlt, bis die verdampften Bestandteile kondensieren. Das Kondensat kann für Analysenzwecke verwendet werden. Die Vorrichtung, die für diese Trennung benutzt wird, besteht aus einem Gebläse, welches das Trägermedium über die chargenweise in die Aufheizeinrichtung eingebrachten Partikel bewegt. Das in der Aufheizeinrichtung entstandene Dampf-Gas-Gemisch wird in enem nachgeschalteten Kühler abgekühlt.

Das vorstehend beschriebene Verfahren und die Vorrichtung zur Durchführung desselben sind lediglich für den labormässigen Betrieb zur Gewinnung kleinster Mengen Kondensat für Analysen geeignet. Ferner ist der Zeit-und Energieaufwand bei diesem Verfahren vergleichsweise hoch, so dass eine grosstechnische Anwendung desselben unwirtschaftlich wäre.

## DARSTELLUNG DER ERFINDUNG

Hier will die Erfindung Abhilfe schaffen. Die Erfindung, wie sie in den Ansprüchen gekennzeichnet ist, löst die Aufgabe, ein kontinuierliches Verfahren zur Trennung von Partikeln anzugeben, welches grosstechnisch eingesetzt werden kann, und eine Vorrichtung zur Durchführung des Verfahrens zu schaffen, welche einen wirtschaftlich günstigen, kontinuierlichen Betrieb ermöglicht.

Die durch die Erfindung erreichten Vorteile sind im wesentlichen darin zu sehen, dass grössere Mengen von Partikeln, beispielsweise Filterstäube mit angelagerten Schadstoffen, kontinuierlich verarbeitet und von diesen Schadstoffen befreit werden können. Die Schadstoffe werden aufgefangen und weiter verarbeitet bzw. in Sondermülldeponien gelagert, während in Partikelform verbleibende Stoffe, beispielsweise die von Schadstoffen gereinigten Filterstäube, von denen dann keine Gefahr mehr für die Umwelt ausgeht, in gewöhnlichen Deponien untergebracht, bzw. als Baumaterial verwendet werden können.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnungen, welche lediglich einen Ausführungsweg darstellen, näher erläutert.

## KURZE BESCHREIBUNG DER ZEICHNUNGEN

Es zeigen:

Fig. 1 ein Blockdiagramm des erfindungsgemässen Verfahrens,

Fig. 2 eine erste schematische Darstellung einer erfindungsgemässen Vorrichtung, und

Fig. 3 eine zweite schematische Darstellung einer erfindungsgemässen Vorrichtung.

Bei allen Figuren sind gleich wirkende Elemente mit gleichen Bezugszeichen versehen.

## WEGE ZUR AUSFÜHRUNG DER ERFINDUNG

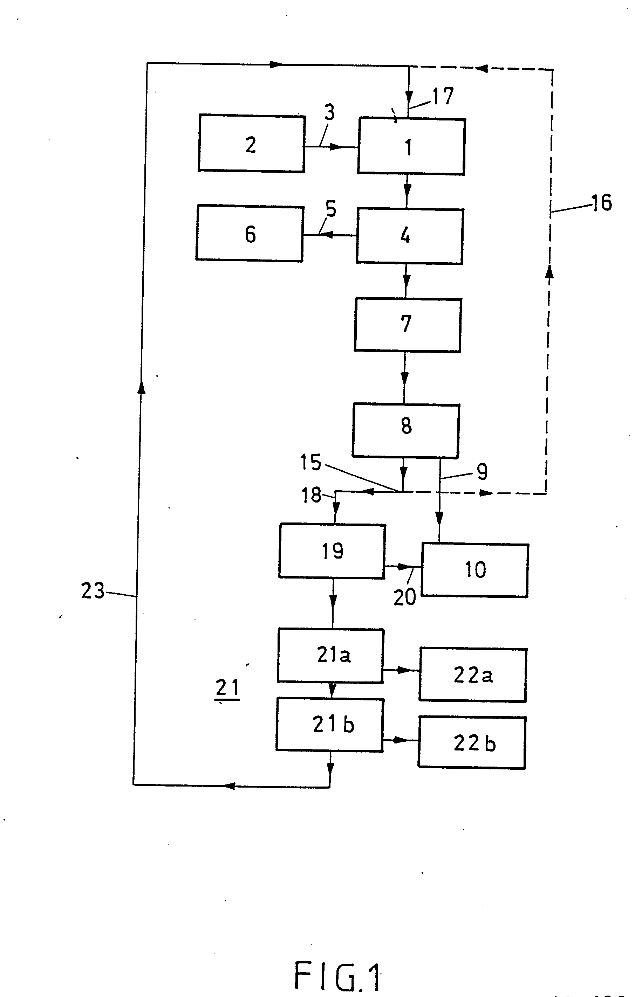

Das Blockdiagramm in Fig. 1 zeigt das Zusammenwirken der verschiedenen, für das Verfahren wichtigen Komponenten. Ein Gebläse 1 hält die Strömung eines gasförmigen Trägermediums aufrecht. Von einem Reservebehälter 2 her können über eine Verbindung 3 gesteuert etwaige Verluste des Trägermediums ersetzt werden. Der Strom des Trägermediums führt vom Gebläse 1 in einen Mischer 4, welcher beispielsweise als Kreisel-oder Schnellmischer ausgebildet ist. In diesen Mischer 4 wird auch der Auslass 5 eines Beschickungsbunkers 6 eingeführt, der mit Partikeln gefüllt ist. Im Mischer 4 werden die Partikel kontinuierlich und dosiert mit dem strömenden gasförmigen Trägermedium zu einem fluidisierten Gemenge vermischt, welches in eine Aufheizeinrichtung 7 strömt. In dieser Aufheizeinrichtung 7 verdampfen Bestandteile der Partikel und bilden zusammen mit dem aufgeheizten Trägermedium ein Dampf-Gas-Gemisch. Dieses Dampf-Gas-Gemisch verlässt gemeinsam mit in Partikelform verbleibenden Bestandteilen der Partikel als eine Mischung die Aufheizeinrichtung 7. Die Mischung wird in einen Staubabscheider 8 geleitet, in welchem die überwiegende Menge der in Partikelform verbliebenen Bestandteile der Partikel abgeschieden und durch eine Leitung 9 in einen Staubsilo 10 geführt wird. Das aus dem Staubabscheider 8 austretende Dampf-Gas-Gemisch, mit einem geringen Anteil von Resten der in Partikelform verbliebenen Bestandteile der Partikel, wird zu einer Verzweigung 15 geführt. Bei dieser Verzweigung 15 wird ein erster Teil dieses Dampf-Gas-Gemisches abgezweigt und durch eine Leitung 16 als ein Umlaufstrom rückgeführt zu einem Eingang 17 des Gebläses 1. Ein zweiter Teil dieses Dampf-Gas-Gemisches wird durch die Leitung 18 in einen Heissgasfilter 19 geführt und dort von den Resten der in Partikelform verbliebenen Bestandteile befreit. Die abgeschiedenen Reste der in Partikelform verbliebenen Bestandteile werden durch eine Leitung 20 in den Staubsilo 10 eingebracht. Das Dampf-Gas-Gemisch wird nach dem Heissgasfilter 19 in einen Kühler 21 eingeleitet, welcher verschiedene Stufen 21a, 21b aufweisen kann mit unterschiedlichen Niveaus der Kühltemperatur. Die verdampften Bestandteile der Partikel kondensieren entsprechend ihren spezifischen Kondensationstemperaturen in den jeweiligen Stufen 21a, 21b des Kühlers aus und werden in zugeordneten Sammlern 22a, 22b aufgefangen. Das abgekühlte Trägermedium verlässt den Kühler 21 und wird durch eine Leitung 23 rückgeführt in den Eingang 17 des Gebläses 1.

Bei diesem Blockdiagramm nach Fig. 1 kann die Leitung 16 für den Umlaufstrom auch entfallen bzw. abgeschaltet werden, wenn die Zusammensetzung der Partikel dies erlaubt.

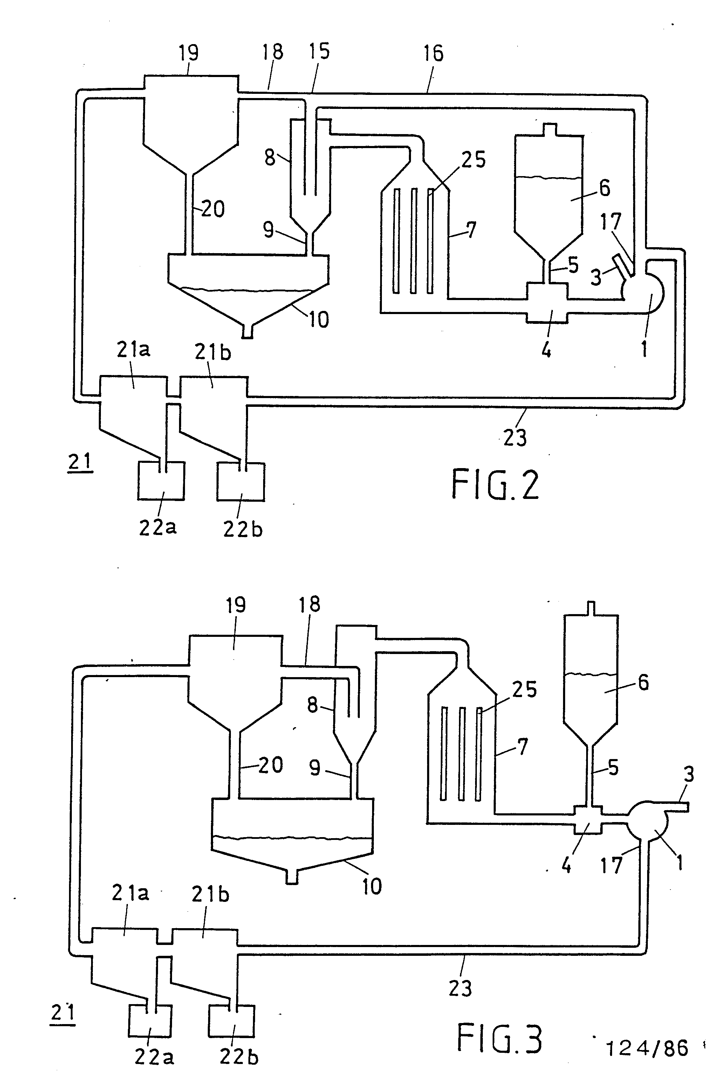

In Fig. 2 ist die Vorrichtung, welche entsprechend dem Blockdiagramm in Fig. 1 arbeitet, dargestellt. Dabei sind Steuer-, Regel-und Dosiereinrichtungen, Sensoren, Einfüll-, Entnahme-und Absperrorgane, usw., die zwangsläufig vorhanden sein müssen, in diese schematische Darstellung nicht eingezeichnet. Ferner sind auch Wärmeisolierungen, welche die gesamte Vorrichtung ausser den Kühler 21 einschliessen, weggelassen worden. Die Verbindung 3 zum Reservebehälter 2 ist nur angedeutet. In der Aufheizeinrichtung 7 sind Heizelemente 25 angegeben, welche das fluidisierte Gemenge aufheizen. Die Heizelemente 25 können elektrisch aufgeheizt werden oder beispielsweise auch vorteilhaft durch Prozesswärme, wie sie in einer Müllverbrennung, in Kraftwerken oder Zementfabriken anfällt. Die Aufheiztemperatur kann von einigen 100 °C bis in den Bereich von etwa 1200 °C gewählt und angepasst werden, je nachdem, welche Bestandteile der Partikel verdampft werden sollen. Ferner ist denkbar, dass ein Plasmabrenner als Wärmequelle eingesetzt wird. Die Aufheizeinrichtung 7 ist so gestaltet, dass in ihr das fluidisierte Gemenge ein Wirbelbett bildet. Auf diese Art wird erreicht, dass dieses Gemenge die Aufheizeinrichtung 7 kontrolliert durchströmt, so dass auch alle Partikel gleichmässig erwärmt werden. Die mittlere Verweildauer der Partikel im Wirbelbettbereich lässt sich der jeweiligen chemischen Zusammensetzung der Partikel anpassen.

Der Staubabscheider 8 wird vorteilhaft als ein-oder mehrstufiger Zyklon gestaltet. Zwischen der Aufheizeinrichtung 7, dem Staubabscheider 8 und dem Heissgasfilter 19 darf kein Temperaturgefälle auftreten, damit die verdampften Bestandteile sich nicht wieder an die in Partikelform verbliebenen Bestandteile anlagern können. Nach diesem Staubabscheider 8 wird bei der Verzweigung 15 durch die Leitung 16 in der Regel der überwiegende Teil des in der Aufheizeinrichtung 7 entstandenen Dampf-Gas-Gemisches als ein Umlaufstrom rückgeführt zum Gebläse 1 und wird dort wieder als Trägermedium in den Kreislauf eingespeist. Durch die Leitung 18 wird der verbleibende Anteil des Dampf-Gas-Gemisches in einen Heissgasfilter 19 geführt, der beispielsweise als elektrostatischer Filter oder als Keramikwabenfilter ausgebildet sein kann. In diesem Heissgasfilter 19 werden die Reste der in Partikelform verbliebenen Bestandteile aus dem verbleibenden Anteil des Dampf-Gas-Gemisches entfernt. Dieses Dampf-Gas-Gemisch wird dann in den Kühler 21 eingeleitet und in verschiedenen Stufen 21a, 21b abgekühlt. Die Niveaus der Kühltemperatur werden so gewählt, dass auf jedem Niveau eine bestimmte Fraktion des Dampf-Gas-Gemisches kondensiert und flüssig in den jeweiligen Sammler 22a, 22b, abgeführt wird. Je nach Zusammensetzung des Dampf-Gas-Gemisches können auch unterschiedliche Niveaus der Kühltemperatur eingestellt werden. Der Kühler 21 kühlt das Dampf-Gas-Gemisch soweit ab, bis alle relevanten verdampften Bestandteile der Partikel kondensiert und abgeführt sind. Das aus dem Kühler 21 austretende Dampf-Gas-Gemisch bzw. Trägermedium, welches noch eine Restwärme aufweist, wird zum Gebläse 1 zurückgeführt und dort wieder in den Kreislauf eingespeist.

Sollten nur geringe Spuren beispielsweise eines Schwermetalls vorhanden sein, so erweisen sich diese geschlossenen Kreisläufe als besonders vorteilhaft, da sich das betreffende Schwermetall in diesen Kreisläufen soweit anreichern kann, bis ein Kondensieren desselben möglich wird.

In Fig. 3 ist eine Vorrichtung dargestellt, bei welcher nach dem Abscheiden der überwiegenden Menge der in Partikelform verbliebenen Bestandteile der Partikel das gesamte Dampf-Gas-Gemisch von Resten der in Partikelform verbliebenen Bestandteile der Partikel befreit und danach gesamthaft abgekühlt wird. Diese Vorrichtung geht aus dem Blockdiagramm nach Fig. 1 hervor, wenn die Leitung 16 für den Umlaufstrom weggelassen wird. Alle übrigen Elemente funktionieren gleich wie bei der Vorrichtung entsprechend Fig. 2, allerdings müssen hier der Heissgasfilter 19 und der Kühler 21 grössere Dimensionen aufweisen bzw. leistungsstärker ausgelegt sein, wenn die Vorrichtung mit gleichen Mengen von Partikeln beschickt wird. Der Vorteil dieser Vorrichtung ist darin zu sehen, dass wenig verunreinigte Partikel rasch und in grossen Mengen gereinigt werden können.

Je nach Zusammensetzung der zu verarbeitenden Partikel kann es sinnvoll sein, das gasförmige Trägermedium unter Normal-, Ueber-oder Unterdruck zu halten und damit gleichzeitig die gesamte Vorrichtung unter den jeweils günstigsten Druckverhältnissen arbeiten zu lassen. Dies bedingt natürlich entsprechende konstruktive Vorkehrungen, wie z.B. druckdichte Schleusen am Auslass 5 des Beschickungsbunkers 6, am Auslass des Staubsilos 10 und den Auslässen der einzelnen Stufen 21a, 21b des Filters 21. Ferner muss die gesamte Vorrichtung entsprechend druckdicht ausgelegt sein. Es ist aber auch vorstellbar den Kühler 21 allein unter Ueberdruck zu betreiben, um einen Kondensationsvorgang zu ermöglichen.

Das gasförmige Trägermedium kann, abgestimmt auf die zu verarbeitenden Partikel, ein oxidierendes oder ein reduzierendes Gas bzw. Gasgemisch enthalten, ebenso wie es aus einem inerten Gas oder Gasgemisch bestehen kann. Wird ein oxidierendes oder ein reduzierendes Gas eingesetzt, so wird vorteilhaft in der Leitung 23 eine Möglichkeit vorgesehen, welche erlaubt, das oxidierende oder das reduzierende Gas zu regenerieren. Wird die Vorrichtung entsprechend Fig. 2 eingesetzt, so kann eventuell auch in der Leitung 16 eine derartige Regenerationsmöglichkeit vorgesehen werden.

Bei besonderen Zusammensetzungen der Partikel ist es auch denkbar in die Leitung 23 eine Gaswäsche einzubauen um zu verhindern, dass Schadstoffe, welche nicht kondensieren, sich in der Vorrichtung anreichern. Die Leitung 23 kann beispielsweise auch durch die in der Regel einer Müllverbrennung nachgeschaltete Gaswascheinrichtung geleitet werden. Ebenso ist es möglich, das Dampf-Gas-Gemisch in der Leitung 23 in den Feuerungsraum der Müllverbrennung zu leiten, um dort die Schadstoffe unschädlich zu machen.

Die Durchführbarkeit des geschilderten Verfahrens wurde durch Versuche bestätigt. Dabei wurde Staub aus dem Filtersystem einer Müllverbrennungsanlage mit u.a. 0,2 % Cadmiumgehalt und 3,25 % Bleigehalt in dem Mischer 4 mit dem Trägermedium Stickstoff zu einem fluidisierten Gemenge vermischt. Der Stickstoffstrom war auf 0,5 m³/h eingestellt, die Staubkonzentration wurde auf 40 g/m³ dosiert. Das fluidisierte Gemenge wurde durch eine elektrisch beheizte Aufheizeinrichtung 7 geführt und dort auf 1000 °C aufgeheizt. Die Verweilzeit des Gemenges in dieser Aufheizeinrichtung 7 betrug ca. sechs Sekunden. Nach dem Staubabscheider 8 und dem Heissgasfilter 19 wurden im Kühler 21 flüssige Rückstände festgestellt. Der aus dem Staubabscheider 8 und dem Heissgasfilter 19 entnommene gereinigte Staub wies keine nachweisbaren Mengen Cadmium auf und der Bleianteil war kleiner als 0,05 %.

Obiges Ausführungsbeispiel zeigt deutlich, dass die bei einer Müllverbrennungsanlage anfallenden Filterstäube von schädlichen Schwermetallanlagerungen befreit und danach problemlos in Deponien gelagert oder für Bauzwecke eingesetzt werden können. Das in Sondermülldeponien zu lagernde oder anderweitig unschädlich zu machende Abfallvolumen einer derartigen Anlage kann damit wesentlich reduziert werden, was grosse wirtschaftliche und ökologische Vorteile mit sich bringt. Es ist aber auch denkbar, vorgetrockneten Klärschlamm oder ähnliche Abfälle zu pulverisieren und mit dem erfindungsgemässen Verfahren von Schadstoffen zu reinigen. Bei den verwendeten Temperaturen werden auch etwa vorhandene organische Schadstoffe unschädlich gemacht, was sich ebenfalls vorteilhaft auswirkt.

## Ansprüche

1. Verfahren zur Trennung von Partikeln, welche mindestens einen unterhalb einer vorgegebenen Temperatur verdampfbaren ersten Stoff und mindestens einen oberhalb der vorgegebenen Temperatur in Partikelform verbleibenden zweiten Stoff aufweisen, bei welchem die Partikel gemeinsam mit einem strömenden gasförmigen Trägermedium auf die vorgegebene Temperatur aufgeheizt werden, wobei aus dem mindestens einen verdampfenden ersten Stoff und dem gasförmigen Trägermedium ein Dampf-Gas-Gemisch gebildet wird, welches anschliessend zumindest teilweise soweit abgekühlt wird, bis der mindestens eine verdampfte erste Stoff kondensiert, dadurch gekennzeichnet,
- dass die Partikel und das gasförmige Trägermedium kontinuierlich und dosiert zu einem fluidisierten Gemenge vermischt werden,
- dass dieses fluidisierte Gemenge in einem Wirbelbett einer Aufheizeinrichtung (7) auf die vorgegebene Temperatur aufgeheizt wird, und eine aus dem hierbei gebildeten Dampf-Gas-Gemisch und dem mindestens einen in Partikelform verbleibenden zweiten Stoff bestehende Mischung entsteht,
- dass unmittelbar nach dem Austreten der Mischung aus der Aufheizeinrichtung (7) die überwiegende Menge des mindestens einen in Partikelform verbleibenden zweiten Stoffes abgeschieden wird, und
- dass danach das Dampf-Gas-Gemisch in mindestens einem geschlossenen Kreislauf weitergeleitet wird.

2. Verfahren nach Anspruch 1, dadurch gekennzeichnet,
- dass nach dem Abscheiden der überwiegenden Menge des mindestens einen in Partikelform verbleibenden zweiten Stoffes ein erster Teil des Dampf-Gas-Gemisches als ein Umlaufstrom abgezweigt wird, welcher rückgeführt und dem Trägermedium beigemischt wird,
- dass ein verbleibender zweiter Teil des Dampf-Gas-Gemisches von Resten des mindestens einen in Partikelform verbleibenden zweiten Stoffes befreit und danach in Stufen abgekühlt wird, und
- dass danach der abgekühlte zweite Teil des Dampf-Gas-Gemisches rückgeführt und dem Trägermedium beigemischt wird.

3. Verfahren nach Anspruch 1, dadurch gekennzeichnet, - dass nach dem Abscheiden der überwiegenden Menge des mindestens einen in Partikelform verbleibenden zweiten Stoffes das gesamte Dampf-Gas-Gemisch von Resten des mindestens einen zweiten Stoffes befreit und danach in Stufen abgekühlt wird, und

- dass das abgekühlte Dampf-Gas-Gemisch rückgeführt und dem Trägermedium beigemischt wird.

4. Verfahren nach einem der Ansprüche 1 bis 3, dadurch gekennzeichnet,
- dass das gasförmige Trägermedium unter Normal-oder Ueber-oder Unterdruck steht, und
- dass der jeweilige Druck auch das Dampf-Gas-Gemisch beaufschlagt.

5. Verfahren nach einem der Ansprüche 1 bis 4, dadurch gekennzeichnet,
- dass dem gasförmigen Trägermedium mindestens ein oxidierendes oder reduzierendes Gas zugesetzt wird oder, dass es aus einem inerten Gas besteht, und
- dass im abgekühlten Dampf-Gas-Gemisch jeweils das oxidierende oder das reduzierende Gas regeneriert wird.

6. Verfahren nach einem der Ansprüche 2 oder 3, dadurch gekennzeichnet,
- dass das abgekühlte Dampf-Gas-Gemisch gewaschen wird.

7. Vorrichtung zur Durchführung des Verfahrens gemäss Anspruch 1, mit einem Gebläse (1) und einer diesem nachgeschalteten, mit einem Kühler (21) in Wirkverbindung stehenden, Aufheizeinrichtung (7), dadurch gekennzeichnet,
- dass zwischen dem Gebläse (1) und der Aufheizeinrichtung (7) ein Mischer (4) für die kontinuierliche und dosierte Vermischung von Partikeln mit einem gasförmigen Trägermedium vorgesehen ist,
- dass unmittelbar nach der Aufheizeinrichtung (7) ein mindestens einstufiger Staubabscheider (8) vorgesehen ist, und
- dass die Vorrichtung als geschlossenes System ausgebildet ist.

8. Vorrichtung nach Anspruch 7, dadurch gekennzeichnet,
- dass das Innere der Aufheizeinrichtung (7) so gestaltet ist, dass die Ausbildung eines Wirbelbettes begünstigt wird, und
- dass Mittel vorgesehen sind, um die Aufheiztemperatur des Wirbelbettes ebenso wie die mittlere Verweildauer des jeweiligen aufzuheizenden Gemenges im Wirbelbett an das jeweilige Gemenge anzupassen.

9. Vorrichtung nach Anspruch 8, dadurch gekennzeichnet,
- dass der Auslass des mindestens einstufigen Staubabscheiders (8) als Verzweigung (15) ausgebildet ist,
- dass von dieser Verzweigung (15) mindestens zwei Leitungen (16, 18) abgehen,
- dass eine erste (16) der mindestens zwei Leitungen (16, 18) als Rückführung zum Gebläse (1) ausgelegt ist,
- dass eine zweite (18) der mindestens zwei Leitungen (16, 18) mit einem Heissgasfilter (19) in Verbindung steht, und

- dass dem Heissgasfilter (19) der stufenförmig ausgebildete Kühler (21) nachgeschaltet ist mit einem Auslass, der über eine Leitung (23) mit dem Gebläse (1) in Wirkverbindung steht.

10. Vorrichtung nach Anspruch 8, dadurch gekennzeichnet,

- dass dem Auslass des mindestens einstufigen Staubabscheiders (8) mindestens ein Heissgasfilter (19) unmittelbar nachgeschaltet ist, und
- dass dem mindestens einen Heissgasfilter (19) der stufenförmig ausgebildete Kühler (21) nachgeschaltet ist mit einem Auslass, der über eine Leitung (23) mit dem Gebläse (1) in Wirkverbindung steht.

FIG.1

FIG.2

FIG.3    124/86

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 140 652 (FARBENFABRIKEN BAYER AG) <br> * Insgesamt * <br> --- | 1,3,4,7,8,10 | B 01 D 53/34 <br> B 01 D 7/00 <br> D 01 D 50/00 |
| A | DE-A-3 514 471 (KLÖCKNER-HUMBOLDT-DEUTZ AG) <br> * Seiten 7,8; Figur 1 * <br> --- | 1,5,6,10 | |
| A | GB-A-1 110 649 (MOBIL OIL AG) <br> * Seite 3, Zeile 69 - Seite 4, Zeile 39; Figur * <br> --- | 1,2,7,8 | |
| A | US-A-4 215 101 (E. KRIEGEL) <br> * Spalte 3, Zeile 47 - Spalte 4, Zeile 39; Figur * <br> --- | 1,7,8 | |
| A | US-A-2 608 472 (E.W. FLOSDORF) <br> ----- | | |

RECHERCHIERTE SACHGEBIETE (Int. Cl.4)

B 01 D 53/00
B 01 D 7/00
B 01 D 1/00
C 22 B 9/00
F 23 J 15/00
B 01 D 46/00
B 01 D 50/00

Der vorliegende Recherchenbericht wurde für alle Patentansprüche erstellt

| Recherchenort | Abschlußdatum der Recherche | Prüfer |
|---|---|---|
| DEN HAAG | 07-03-1988 | POLESAK, H.F. |

EPO FORM 1503 03.82 (P0403)